Europäisches Patentamt

European Patent Office

Office européen des brevets

(19)

(11) **EP 1 184 164 A1**

## (12) EUROPEAN PATENT APPLICATION

(43) Date of publication:
**06.03.2002 Bulletin 2002/10**

(51) Int Cl.[7]: **B32B 7/04**, B32B 27/00

(21) Application number: **00118967.9**

(22) Date of filing: **01.09.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **3M Innovative Properties Company**<br>**St. Paul, Minnesota 55133-3427 (US)** | (72) Inventor: **Kreckel, Karl Werner**<br>**42781 Haan (DE)**<br><br>(74) Representative: **Wilhelm, Stefan M. et al**<br>**Office of Intellectual Property Counsel, c/o 3M**<br>**Deutschland GmbH, Carl-Schurz-Strasse 1**<br>**41453 Neuss (DE)** |

### (54) Stack of goods

(57)     The present invention refers to a stack of goods (21) comprising two or more superimposed layers of goods (21) and an interlayer sheet (10) comprising two or more layers and a first and second exposed major surface, at least part of the first major surface of the interlayer (10) sheet being formed by a first polymer layer wherein the polymer has a Vicat softening point of less than 65°C, said first major surface of said interlayer sheet (10) being in contact with at least part of the surface of at least one piece of goods of a layer of the stack.

Fig. 2

EP 1 184 164 A1

**Description**

The present invention relates to a stack of goods comprising two or more superimposed layers of goods and an interlayer sheet having two major surfaces wherein at least part of at least one of said major surfaces is in contact with at least part of the surface of a piece of goods in a layer of the stack. The present invention furthermore refers to the use of said interlayer sheet for increasing the stability of a stack of goods and to a method of preparing a stack of goods comprising including said interlayer sheet into said stack of goods so that at least one of the two major surfaces of said interlayer sheet is in contact with at least one piece of goods in a layer of the stack.

Background of the invention

It is common in industry that goods are palletized, stacked or assembled otherwise for storage, internal transportation at the production site and external transportation and shipment. Various methods have been disclosed in prior art to sufficiently stabilize such stacks of goods throughout the whole shipment and transport.

US 5,351,461 discloses a method and installation for packaging a palletizable load of constituent elements or goods comprising inserting a non-slip sheet between each pair of subsequent layers of said load and non-peripheral strapping of the load by means of a microcreped stretchable paper tape which is preferably additionally secured to the load by depositing spots of glue.

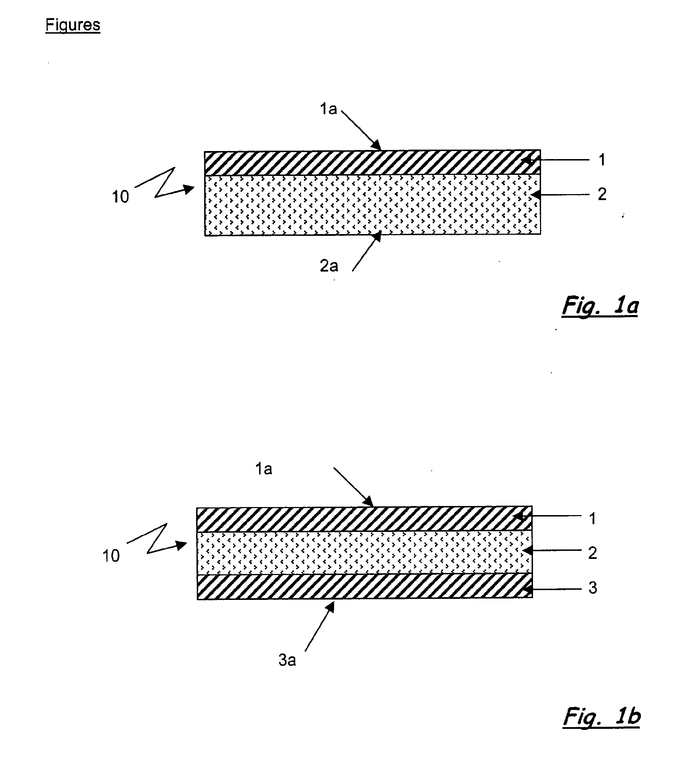

US 5,339,957 refers to the stabilization of a stack of cartons which have highly slippery, glossy and point of sales graphics surfaces. Stabilization is obtained by inserting high-friction tie sheets between adjacent layers of the stack wherein the tie sheet preferably has a chipboard substrate which is coated on both sides with an ultra-high friction tackified coating. In the embodiment of Fig. 1 of US '957, the stack of goods is additionally secured by a covering of a plastic stretch wrap film.

EP 0,863,087 discloses printing and/or spraying silicone-based anti-slip layers and the outermost surface of a wall of a package so that the anti-slip layer is in contact to an adjacent package when the package is stacked with other packages in an assembly. EP '087 furthermore discloses an anti-slip sheet to be interposed in an assembly of stacked packages, said anti-slip sheet comprising one at least one side a silicone-based anti-slip layer.

Methods of stabilizing stacks of goods disclosed in the state of the art also include applying of hot-melt adhesives to the surfaces of goods which are in contact with adjacent goods in order to adhere such goods to each other.

The prior art methods of palletizing, assembling or stacking goods do not always result in stacks of goods which are sufficiently stable for internal and external transportation or shipment processes and/or exhibit further disadvantages. Interlayer sheets of cardboard or corrugated paper typically are several mm thick and therefore require considerable space for storage and result in large volumes of waste. Adhering of boxes with hot-melt adhesives or other adhesives tend to partly tear cardboard boxes, for example, upon depalletizing and/or leaves residual amounts of the adhesives on the cardboard boxes which adversely affects subsequent handling of such boxes. Auxiliary stack-stabilizing means such as, for example, adhesives or polymeric wrappings cannot be removed and re-applied when the stack or pallet has to be rearranged. Silicone coatings on cartons, packages or interlayer sheets, respectively, tend to be rubbed off and may contaminate other products which may interfere with the application of paint or other coatings or components to such products.

It was therefore an object of the present invention to provide stabilized stacks of goods and methods for preparing such stacks which do not exhibit the shortcomings of state-of-the-art stacks of goods or exhibit such disadvantages to a lower degree only, respectively. Other objects of the present invention are apparent to the person skilled in the art from the following detailed description of the invention.

Summary of the invention

The present invention refers to a stack of goods comprising two or more superimposed layers of goods and an interlayer sheet comprising two or more layers and a first and second exposed major surface, at least part of the first major surface of the interlayer sheet being formed by a first polymer layer wherein the polymer has a Vicat softening point of less than 65 °C, said first major surface of said interlayer sheet being in contact with at least part of the surface of at least one piece of goods of a layer of the stack.

The present invention furthermore refers to the use of an interlayer sheet comprising two or more layers and a first and second exposed major surface, at least part of the first major surface of the interlayer sheet being formed by a first polymer layer wherein the polymer has a Vicat softening point of less than 65 °C, for increasing the stability of a stack of goods, and to a method of preparing a stack of goods comprising superimposing at least two layers of goods and inserting an interlayer sheet between at least one pair of superimposed, adjacent layers of goods of such stack.

The present invention furthermore refers to an interlayer sheet comprising two or more layers and a first and second exposed major surface, at least part of the first major surface of the interlayer sheet being formed by a first polymer layer wherein the polymer has a Vicat softening point of less than 65 °C.

Brief description of the figures

*Fig. 1a* is a schematic cross-sectional view of an interlayer sheet 10 according to the present invention comprising a first polymer layer 1 and a support layer 2, said first polymer layer 1 forming the first major exposed surface 1a of the interlayer sheet 10.

*Fig. 1b* is a schematic cross-sectional view of an interlayer sheet 10 according to the present invention comprising a first polymer layer 1 and a second polymer layer 2, said first and second polymer layer forming first and second major exposed surfaces 1a and 3a, respectively, of the interlayer sheet 10.

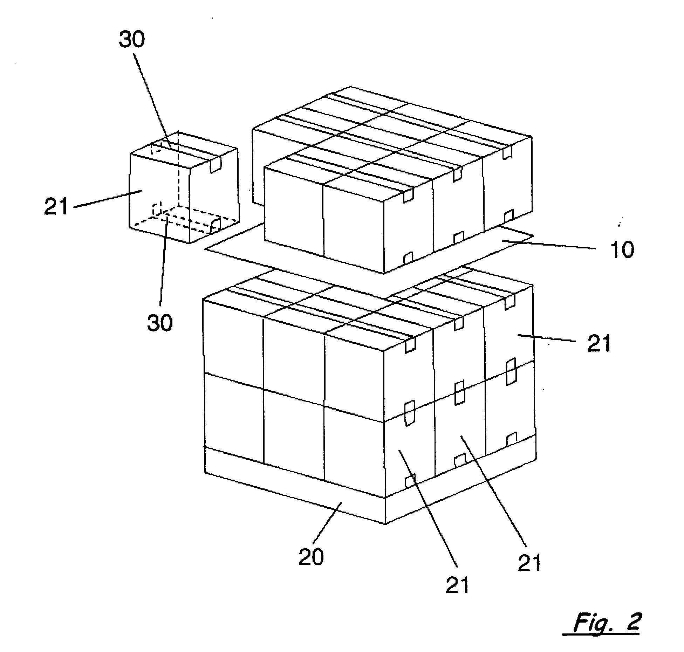

*Fig. 2* is an exploded view of a stack of cartons 21 according to the present invention comprising a pallet 20 bearing cartons 21 sealed with a packaging tape 30 and arranged on top of each other in columns wherein an interlayer sheet 10 is interposed between the top layer and the subjacent layer of the stacks of goods.

Detailed description of the invention

Interlayer sheets 10 which are useful in the present invention comprise a first major exposed surface 1a at least part of which is formed by a first polymer layer 1 as is shown in the exemplary schematic cross-sectional views of Fig. 1a and 1b, respectively.

The term first polymer layer as used above and below is to be understood broadly and includes, for example, a continuous polymer layer covering all or part of the support layer or a discontinuous polymer layer including, for example, strips or spots of the polymer of said first polymer layer on the support. Interlayer sheets wherein the first polymer layer is continuous and forms all or essentially all of the first major surface, are preferred.

The term interlayer describes a layer material having an extension in the X- and Y-direction which is large in comparison to the extension in Z-direction. The term interlayer sheet refers to a segment or section of said interlayer. The dimensions of the interlayer sheet are preferably selected so that the sheet is in contact with at least two pieces of goods in at least one layer of the stack. The dimensions of the interlayer sheet are preferably selected so that it essentially matches with the dimensions of the interface between the upper and lower layer of a pair of adjacent, superimposed layers of the stack of goods. The shape of the sheet can vary widely and includes, for example, square, circular or rectangular shapes.

The polymer of said first polymer layer forming at least part of the first major exposed surface 1a has a Vicat softening point of less than 65 °C, more preferably of not more than 60 °C and especially preferably of not more than 55°C. The Vicat softening point is evaluated according to ISO 306:1994(E) using a force by which the steel rod with its indenting tip is pressed onto the polymer sample, of 10 N and a temperature increase rate of 120 °C/h. The Vicat softening point of the polymer of the first polymer layer preferably is at least 30°C and more preferably at least 35 °C because polymers with lower Vicat softening points are difficult to handle and tend to stick, for example, to lamination rolls and the stretching apparatus, in case the first polymer layer or all or part of the interlayer sheet including the first polymer layer, respectively, are stretched during processing. The Vicat softening point of the polymer of the first polymer layer prefereably is between 35 °C and 60 °C and, more preferably, between 40 °C and 55 °C.

The polymer of said first polymer layer 1 having a Vicat softening point of less than 65 °C can comprise one or more polymer components which are preferably selected from a group of polymers consisting of very low density polyethylenes and copolymers comprising an olefin as a first comonomer and an alkyl(meth)acrylate or vinyl acetate as a second comonomer.

The terms "ultra low density polyethylene (ULDPE)", "very low density polyethylene (VLDPE)" and "linear very low density polyethylene (LVLDPE)" have been used interchangeably in the polyethylene art to designate the polymer subset of linear low density polyethylenes having a density less than or equal to 0.915 g/cm³. Above and below, the term "very low density polyethylene" will be used for polyethylenes in this density area. The term "linear low density polyethylene (LLDPE) will be used for low density polyethylenes having a density of above 0.915 g/cm³.

In the present invention, VLDPE having a density of 0.900 g/cm³ or less, preferably of 0.895 g/cm³ or less and more preferably of between 0.850 and 0.8925 g/cm³ are preferred. The term VLDPE includes both homopolymers and copolymers of ethylene with one or more comonomers. Preferred comonomers for use in such copolymers include α-olefins having from 3 to about 14 carbon atoms, preferably from 4 to 10 carbon atoms and especially preferably from 4 to 8 carbon atoms. Representative examples of such comonomers include 1-butene, 1-pentene, 1-hexene, 4-methyl-pentene-1, 1-octene, 1-decene, and the like. Of these, 1-octene is particularly preferred. VLDPEs wherein one or more α-olefins are present in an amount ranging from about 1 to about 20 percent by weight and, in particular, from about 1 to about 10 percent by weight, are preferred. VLDPEs which are suitable in the present invention may comprise other comonomers which, if present, are preferably used in an amount of about 1 to about 15 and more preferably from about 1 to about 10 percent by weight of VLDPE. The overall amount of comonomers preferably is less than about 30 percent, more preferably less than about 25 percent and especially preferably less than about 20 percent by weight of the VLDPE.

While the VLDPEs preferred for use in the present invention are those polymerized with metallocene catalysts, any VLDPE having a density of less than 0.900 g/cm$^3$ and a Vicat softening point of less than 65 °C may be used. As used herein, the term "metallocenes" refers to polymerization catalyst systems such as the system disclosed in US 5,191,052. Metallocenes are complex combinations of a metal atom compound with cyclopentadienyl groups. The metallocenes are a "sandwich complex" arrangement of two cyclopentadienyl groups and a group IV transition Metal (Ti, Zr, Hf, Cr). Such catalysts are also named "single site" or "constrained geometry" catalysts.

VLDPEs which are obtained by using a metallocene catalyst system are often also referred to as plastomers.

VLDPEs useful in the present invention preferably have a weight average molecular weight in the range from 50,000 to 200,000, preferably from 75,000 to 200,000, and most preferably from 75,000 to 150,000. The VLDPEs preferably have a melt-flow index of at least 0.1 g /10 min and more preferably of at least 0.5 g/10 min.

Manufacture of VLDPEs is well known in the art. Any of several processes may be utilized including both high and low pressure processes preferably employing metallocene catalysts as is disclosed, for example, in US 5,191,052. VLDPEs which are commercially available are specified in the example section below and include, for example, AFFINITY series polyethylene plastomers commercially available from Dow Plastics and ENGAGE series polyethylene plastomers commercially available from DuPont Dow Elastomers.

A second class of polymers preferred for use in the first polymer layer 1 forming at least part of the first major exposed surface 1a of the interlayer sheet includes copolymers comprising an olefin as a first comonomer and an alkyl (meth)acrylate or vinyl acetate as a second comonomer. Suitable olefins include ethylene, propylene, butylene, 2-methyl-pentene, hexene, octene, derivatives thereof, or combinations of an olefin or derivative thereof. Especially preferred are polymers wherein the olefin is ethylene. The alkyl group of the alkyl(meth)acrylate preferably has a carbon number from 3 to 25, more preferably from 4 to 20. Specific examples of preferred acrylates include methyl acrylate, ethyl acrylate, propyl acrylate, n-butyl acrylate, 2-ethylhexyl acrylate, decyl acrylate, octadecyl acrylate, methyl methacrylate, ethyl methacrylate, n-butyl methacrylate and the like. Of these, methyl acrylate, n-butyl acrylate and 2-ethylhexyl acrylate are particularly preferred.

Especially preferred are also copolymers comprising ethylene as a first comonomer and vinyl acetate as a second comonomer. The amount of the vinyl acetate comonomer with respect to the mass of the ENA copolymer preferably is 15-45 wt.% and more preferably 20-40 wt.%. For percentages of the amount of the vinyl acetate comonomer outside of the range of 12-45 wt.%, the Vicat softening temperature tends to be unfavourable.

The ethylene/alkyl(meth)acrylate or vinyl acetate, respectively, copolymer (which is also referred to above and below as E/A(M)A or ENA copolymer, respectively) can comprise other comonomers such as, for example, other free radically polymerizable monomers such as, for example, acrylic acids (i. e. acrylic, methacrylic and ethacrylic acid), other acrylates or other vinyl esters. These additional monomers are preferably present in small amounts, usually less than a total of about 10 percent by weight based upon the weight of the resulting copolymer.

The E/A(M)A or ENA, respectively, copolymers which are useful in the present invention preferably have a melt-flow index of 0.5 -20 and more preferably of 2-10.

The E/A(M)A or ENA, copolymers, respectively, useful in the present invention are known in prior art and can be produced, for example, by the method disclosed in US 3,350,372. Generally ethylene, alkyl(meth)acrylate or vinylacetate, respectively, and, if desired, further monomer(s) are metered into, for example, a high pressure autoclave reactor along with any one of a number of well-known free radical polymerization initiators (catalysts) in an effective amount. Particularly preferred catalysts include organic peroxides such as, for example, lauroyl peroxide, di-tert butyl peroxide, tert butyl peroxide, tert butyl perpivilate and various azo compounds.

The polymer which is used in the first polymer layer of the interlayer sheet forming at least part of the first major exposed surface 1a of said sheet can comprise one or more VLDPEs and/or one or more E/A(M)A or ENA, copolymers, respectively, which are selected so that the Vicat softening point of the polymer of the exposed layer of the backing is less than 65 °C. Vicat softening points for VLDPEs or E/A(M)A or ENA copolymers, respectively, are reported for various polymers in literature. The Vicat softening points of the polymers used in the first polymer layer of the interlayer sheet of the Examples are given in Table 1 below. The Vicat softening points of polymers which are not reported in literature can easily be measured applying the procedure according to ISO 306:1994(E) using a force of 10 N and a heating rate of 120 °C/h as was specified above. As a rule of thumb, the Vicat softening point of a polymer, comprising a mixture of two or more polymer components each having a Vicat softening point of less than 65 °C is usually less than 65 °C, as well.

The polymer of the first polymer layer forming at least part of the first major surface of the interlayer sheet comprises in a first preferred embodiment preferably 1 to 5, more preferably 1 to 3 and especially preferably 1 to 2 VLDPEs. The VLDPE polymer(s) are preferably present in an amount of at least 50 percent by weight, more preferably of at least 75 percent by weight and especially preferably of at least 95 percent by weight with respect to the mass of the polymer of the first polymer layer.

In a second preferred embodiment, the polymer of the first polymer layer forming at least part of the first major surface of the interlayer sheet, preferably comprises 1 to 5, more preferably 1 to 4 and especially preferably 1 to 3 copolymers of E/A(M)A or ENA, respectively. These copolymers are preferably present in an amount of at least 60 percent by weight, and more preferably of at least 80 percent by weight with respect to the mass of the polymer of the first polymer layer.

In a third preferred embodiment, the polymer of the first polymer layer forming at least part of the first major surface of the interlayer sheet comprises at least one VLDPE and at least one E/A(M)A or ENA copolymer, respectively. The ratio of the mass of the VLDPE(s) over the mass of the E/A(M)A-VA copolymer(s) preferably is between 0.2 and 10 and, more preferably, between 0.5 and 5. The sum of the masses of the VLDPE(s) and the E/A(M)A-VA copolymer (s) with respect to the mass of the polymer of the first polymer layer preferaby is at least 70 percent by weight and more preferably at least 75 percent by weight.

The polymer of the first polymer layer forming at least part of the first major surface of the interlayer sheet may comprise further polymers such as, for example, homopolymers or copolymers including two or more comonomers, of an olefin, or derivatives of such olefin-comprising polymers. Examples for suitable additional olefin homopolymers include high density polyethylene (HDPE) which is commercially available, for example, from Dow Chemical Company, Midland, MI ("Dow") under the trade designation "4352N"; low density polyethylene (LDPE) which is commercially available, for example, from Dow under the trade designation "LDPE 722" (having a melt index of 8.0 g/10 min. and a density of 0.92 g/cm$^3$); polypropylene which is commercially available, for example, from Shell Chemical Company, Houston, TX ("Shell") under the trade designation "SRD-4-188" (having a melt flow rate of 5.0 g/10 min. and a butylene content of 5 percent); and polybutylene which is commercially available, for example, from Shell under the trade designation "PB DP-8220". Examples for suitable additional olefin copolymers include copolymers of ethylene and any of propylene, butylene, hexene, or octene; copolymers of propylene and any of ethylene, butylene, hexene, or octene; or terpolymers including an olefin such as a terpolymer of ethylene, butylene and hexene. A suitable terpolymer of ethylene, butylene, and hexene is commercially available from Exxon Chemical Company, Houston, TX, under the trade designation "Exact 3034" (having a melt index of 3.5 g/10 min. and a density of 0.902 g/cm$^3$).

The amount of additional polymers which are different from VLDPEs and E/A(M)A-VA copolymers in the polymer of the first polymer layer forming at least part of the first major surface of the interlayer sheet preferably is less than 7.5 percent by weight, more preferably less than 5 percent by weight and especially preferably less than 2 percent by weight with respect to the mass of the polymer of the first polymer layer of the interlayer sheet. The additional polymer, included into the polymer of the first polymer layer of the interlayer sheet, preferably exhibits a Vicat softening point of less than 70 °C, more preferably of less than 65 °C and especially preferably of less than 60 °C.

The polymer of the first polymer layer forming at least part of the first major surface of the interlayer sheet may further comprise further additives such as, for example, film-building additives, processing aids, pigments, colorants, fluorescent agents, UV light absorbers, UV light inhibitors, antioxidants, tracers, anti-caking agents, and fillers. Exemplary ultraviolet light absorbers include those available from Ciba-Geigy Corporation, New York City, NY under the trade designation "Tinuvin 325" and "Tinuvin 900" and those available from Clariant Corporation, Charlotte, NC under the trade designation "Sandover VSU". Exemplary ultraviolet light inhibitors include those available from Ciba-Geigy under the trade designation "Tinuvin 292" and "Tinuvin 144". Exemplary antioxidants include those available from R. T.Vanderbilt Company, Inc., Norwalk, CT under the trade designation "Vanox 1320" and "Vanox ODP". Exemplary colorants (i. e., pigments and dyes) include titanium dioxide available from E. I. DuPont de Nemours & Company, Wilmington, DE ("DuPont") under the trade designation "Ti-Pure R-104". Exemplary fluorescent agents include those available from Ciba-Geigy under the trade designation "Uvitex OB". Exemplary anti-caking agents include silica available from Degussa Corporation, Teterboro, NJ under the trade designation "Siperant 22" and "Siperant D17". Exemplary fillers include calcium carbonate, for example, available from Georgia Marble Company, Atlanta, GA under the trade designation "Gamaco" and "Calwhite"; clay, for example, available from Huber Industrial Minerals, Macon, GA under the trade designation "Huber 40C" and "Huber 900"; and talc such as that available from Pfizer Minerals Pigments and Metals Division, New York City, NY under the trade designation "Pfizer CP 38-33".

The sum of the amounts of such further additives with respect to the mass of the polymer of the first polymer layer forming at least part of the first major surface of the interlayer sheet is low and preferably less than 10 percent by weight, more preferably not more than 7.5 percent by weight and especially preferably not more than 5 percent by weight. The amount of particle type further additives such as pigments or fillers has to be selected low enough so that such additives do not adversely affect the softness and conformability of the stretched backing.

The polymer of the first polymer layer forming at least part of the first major surface of the interlayer sheet preferably comprises one or more polymer components having a Vicat softening temperature of less than 65 °C, more preferably of less than 60 °C and especially preferably of between 40-60 °C in order to provide a Vicat softening temperature of less than 65 °C for the polymer of the exposed layer of the backing. The Vicat softening point of the polymer of the first polymer layer forming at least part of the first major surface of the interlayer sheet can optionally be decreased by incorporating into such polymer low-molecular weight organic additives such as, for example, oligomeric compounds, mineral oils, waxes and low molecular weight polyisobutylenes. The amount of such additives preferably is low and, in particular, less than 7.5 percent by weight, more preferably less than 5 percent by weight and especially preferably less than 2 percent by weight.

The interlayer sheet 10 comprises a second layer referred to as support layer 2 which mechanically supports the first polymer layer 1 and tends to improve the handleability of the interlayer sheet 10 and/or to import desirable mechanical properties such as flexibility, tear resistance and stiffness to the interlayer sheet 10.

The support layer 2 of the interlayer may be selected from a wide variety of polymer materials which are preferably selected from the group of stretchable polymer materials in order to allow for stretching of the interlayer sheet. Since the first polymer layer 1 and the support layer 2 of the interlayer sheet 10 are preferably co-extruded, the support layer 2 preferably comprises a hot-melt processable polymer such as a thermoplastic polymer. Representative examples of polymers include polyamides (e. g., nylon); polyolefins (e. g., polyethylenes, polypropylenes, polybutylenes, poly-4-methylpentenes and others); polystyrenes; polyesters; copolyesters; polyvinyl chlorides; polyethylene vinyl acetates; copolymers (e. g., ethylene propylene copolymers, ethylene butylene copolymers, ethylene hexene copolymers, ethylene octene copolymers, propylene butylene copolymers, and thermoplastic rubber block copolymers); polymethyl methacrylates; and mixtures and copolymers thereof. Especially preferred materials for the support layer include polypropylenes, polypropylenes blended with other polyolefins, and copolymers of propylene and other alpha-olefins in amounts, for example, of up to about 50 percent by weight based on total weight of the substrate. Preferred materials for the support layer include semi-crystalline polypropylene having a melting point greater than about 150 °C, semi-crystalline polyethylene having a melting point greater than about 100 °C, and semi-crystalline or amorphous polyester. Many of the aforementioned polymeric materials are commercially available and may be used without modification. Alternatively, they may be modified in ways well known to one of ordinary skill in the art. For example, the compositions for preparing support layers can be modified with minor amounts of conventional modifiers, for example, colorants (i.e. pigments, dyes), fluorescing agents, antioxidants, and fillers, such as zinc oxide, titanium dioxide, calcium carbonate or hydrocarbon resins.

In case the interlayer sheet is not stretched or only the first polymer layer 1 of the interlayer and/or, if present, further layers of the interlayer other than the support layer, are stretched, the support layer may also be selected from materials which are not stretchable such as, for example, paper layers, metal films or pre-stretched polymeric films.

In a preferred embodiment according to the present invention, the interlayer sheet 10 preferably comprises a second polymer layer 3 which is applied to the support layer 2 or to another non-exposed inner layer of the interlayer sheet between the support layer 2 and the second polymer layer 3. The polymer of the second polymer layer preferably has a Vicat softening point of less than 65°C whereby the composition of the first and second polymer layer can be equal to or different from each other, respectively. The polymer of the second polymer layer is especially preferably selected from a group of polymers consisting of VLDPEs, E/A(M)A and ENA copolymers.

The polymer of the second polymer layer can also be selected from the group of re-positionable pressure-sensitive adhesives including, for example, those disclosed in US 3,691,140 and US 4,166,152. Acrylate-based pressure-sensitive adhesives which can be peeled, for example, from cardboard surfaces without leaving residues behind, are preferred.

In a preferred embodiment of the present invention, the interlayer sheet 10 comprises a first polymer layer 1 and a second polymer layer 3 wherein

• the polymer of both the first and second polymer layers have a Vicat softening point of less than 65 °C and
• the thickness of the first and second polymer layer and/or the composition of the polymer of the first and second polymer layer, respectively, are different from each other.

In case the thickness is varied, the thickness of the thinner of the first and second polymer layer preferably is between 1-15 µm and, more preferably, between 3-15 µm, and the thickness of the other of the two layers is preferably between 10-80 µm and, more preferably, between 10-60 µm whereby the thickness of the thicker polymer layer is > 15 µm and preferably > 20 µm for thicknesses of the thinner layer of between 10-15 µm.

In case the composition of the polymer of the first and second polymer layer, respectively, is varied, such variation is preferably performed so that the difference between the Vicat softening points of the polymers of the first and second polymer layer, respectively, is at least 2 °C, more preferably at least 3 °C and especially preferably at least 5 °C.

When inserting such interlayer sheet wherein the first and second polymer layer are different from each other, between a pair of adjacent, superimposed layers of a stack of goods, the interlayer sheet is preferably inserted so that the polymer layer having the higher thickness and/or the lower Vicat softening point is in contact with the top surface of the lower layer of said pair of layers. It was found by the present inventor that upon depalletizing or removing otherwise the goods from the stack of goods, the interlayer sheet tends to remain on the top surface of the lower layer of goods which is advantageous and facilitates said de-stacking procedure.

Also, interlayer sheets useful in the present invention having sufficiently flexible layers such as polymeric layers and a thickness of preferably not more than 300 μm are usually wound up to a roll for storage. It was found that unwinding of such roll is facilitated if the first and second polymer layer of the interlayer have different thicknesses and/ or that the polymers of such layer have Vicat softening points which are different from each other.

The interlayer sheet of the present invention may comprise one or more further non-exposed layers in addition to the first and second polymer layer and the support layer. Such additional layer or layers are preferably applied between the first polymer layer and the support layer or the second polymer layer and the support layer, respectively. Such additional layers may be included to modify or improve, for example, the mechanical properties of the interlayer such as, for example, its flexibility or conformability to rough surfaces.

It is preferred in the present invention that the first polymer layer of the interlayer sheet is oriented or stretched. Stretching can be obtained by providing the first polymer layer of the interlayer sheet as a single film and stretching it with subsequent lamination of the stretched first polymer layer to the support layer and optionally further layers of the interlayer sheet; this method is less advantageous in case the first polymer layer is discontinuous. It is, however, preferred that the first polymer layer is applied first to the support layer of the interlayer with subsequent stretching. The first polymer layer is preferably coextruded with the support layer to give the interlayer sheet but it is also possible, for example, to coat a precursor of the first polymer layer to the support layer with or without using one or more solvents with subsequent drying and/or polymerization. Co-extrusion of the first polymer layer and the support layer is preferred because this results in a strong and reliable anchoring of the two layers to each other.

If the interlayer sheet comprises further layers in addition to the first polymer layer and the support layer, such further layers may be incorporated before or after stretching. Stretching of the interlayer sheet as a whole is preferred.

The term "stretched" or "oriented" as used above and below refers to stretching of the first polymer layer at a temperature below its crystalline melting point, or of all or part of the interlayer sheet including the first polymer layer at a temperature below the lowest of the melting points of the stretched layers of the interlayer sheet, respectively. Stretching can be performed in one or two directions which is referred to as monoaxial or biaxial stretching. Biaxial stretching can be performed by stretching into the first and second stretch direction, respectively, subsequently or simultaneously.

The term "stretch ratio" as used herein to describe a method of stretching or a stretched layer or interlayer sheet, respectively, indicates the ratio of a linear dimension of a given portion of a stretched layer or interlayer sheet to the linear dimension of the same portion prior to stretching. Alternatively, the term "stretch parameter" may be used which is defined as the value of the stretch ratio minus 1.

The first polymer layer or all or part of the interlayer sheet including the first polymer layer, respectively, are preferably monoaxially or biaxially and more preferably biaxially stretched. In an especially preferred embodiment of the present invention, the first polymer layer or all or part of the interlayer sheet including the first polymer layer, respectively, are simultaneously biaxially stretched.

Monoaxial stretching may be performed by propelling the first polymer layer or all or part of the interlayer including the first polymer layer, respectively, over rollers of increasing speed into the machine direction (MD) as is described, for example, in US 2,618,012, US 3,046,599, US 3,502,766 or US 3,890,421. Both monoaxial and biaxial stretching is preferably performed, however, by using a flat film tenter apparatus that grasps the first polymer layer or all or part of the interlayer including the first polymer layer, respectively, (employing such means as a plurality of clips) along the opposing edges of the sheet and propels the grasping means in one stretch direction to provide a monoaxially stretch sheet, first in a first stretch direction and subsequently in a second stretch direction to provide a subsequently biaxially stretched sheet and simultaneously in a first and a second stretch direction to provide a simultaneously biaxially stretched sheet of the first polymer layer or all or part of the interlayer sheet including the first polymer layer, respectively, Typically but not always, the first and the second stretch direction are substantially perpendicular to each other and are in the machine directon ("MD") of the sheet and in the cross direction ("CD") of the sheet. Biaxial simultaneous stretching in MD and CD can be obtained, for example, by propelling the grasp sheet in the MD along diverging rails. By increasing clip speed in the MD, stretch in the MD occurs while by using diverging rails, CD stretch occurs. Such methods and suitable flat film tenter apparatuses are described in US 4,675,582, US 4,825,111, US 4,853,602, US 5,036,262, US 5,051,225 and US 5,072,493.

The stretch parameters for monoaxial stretching preferably vary between 3:1 and 15:1 and more preferably between 4:1 and 12:1.

The stretch parameters for biaxial stretching in the first and second direction of stretching preferably are independently from each other between 3:1 and 15:1, more preferably between 4.1 and 12:1 and especially preferably between 5:1 and 10:1. The term "simultaneous biaxial stretching" as used above and below means that at least 10 % of the final stretch in each of the first and second direction of stretching being performed simultaneously, more preferably at least 25 %, and still more preferably at least 40 %. Although simultaneous biaxial stretching can be obtained by tubular blown film stretching processes, it is preferred to use flat film tenter stretching processes just described to minimize thickness variations and avoid processing difficulties typically associated with tubular blown film processes.

Further details on suitable stretching parameters can be taken from US S. N. 09/192,059 filed by the present applicant on November 13, 1998, which is incorporated herein by reference. With the benefits of the teachings in the present patent specification and the cross-referenced US S. N. 09/192,059 mentioned above, one of skill in the art may adjust any or all of the parameters and thereby obtain interlayer sheets with advantageous properties.

If only the first polymer layer of the interlayer sheet has been stretched, the support layer is subsequently applied to the inner, non-exposed surface of the exposed layer, e. g., by extrusion or lamination.

It was found by the present inventor that stretching of the first polymer layer or all or part of the interlayer sheet including the first polymer layer, respectively, tends to increase T-peel adhesion of the first polymer layer of the interlayer sheet against itself and/or to impart such T-peel adhesion against itself to the first polymer layer. This was found by the present inventor, in particular, for interlayer sheets wherein the polymer of the first polymer layer comprises one or more VLDPEs. Stretching of the first polymer layer or all or part of the interlayer sheet including the first polymer layer, respectively, also tends to impart advantageous mechanical properties to the interlayer sheet. It was found by the present inventor that the first polymer layer or all or part of the interlayer sheet including the first polymer layer, respectively, is preferably stretched biaxially and more preferably simultaneously biaxially.

Interlayer sheets the first polymer layer of which exhibits a T-peel strength against itself after a dwell time of 3 days at 23 °C of at lest 0.10 N/1.27 cm and more preferably of at least 0.15 N/1.27 cm, are preferred. The T-peel strength of the first polymer layer of the interlayer sheet against itself after a dwell time of 3 days at 50 °C preferably is at least 1.5 N/1.27 cm, more preferably at least 2.0 N/1.27 cm and especially preferably at least 2.5 N/1.27 cm.

The first and, if present, second polymer layer of the interlayer sheet are preferably printable wherein the surface coverage of the printing with respect to the surface of the first and, if present, second polymer layer, respectively, preferably is less than 0.5, more preferably less than 0.35 and especially preferably less than 0.25 in order not to adversely affect the stack-stabilizing effect of the interlayer'sheet.

The interlayer sheets of the present invention comprising two or more layers and a first and a second major surface wherein at least part of the first major surface is formed by the first polymer layer the polymer of which has a Vicat softening point of less than 65 °C, were found to increase the stability of a stack of goods. The shape of the goods which can be used in the stacks of goods according to the present invention can vary and includes any shape which allows said goods to be arranged in superimposed layers of the stack. Specific examples of goods include, for example, cartons, crates, half-open display cartons which are optionally sealed at one end, e. g., with a heat-shrunk polymer film, sacks, plastic wrapping used, for example, for diapers and toilet articles, or specially treated cartons such as cartons of consumer products having glossy, point of sales graphics surfaces or cartons with polycoated surfaces. It is also possible to use goods of different shape such as, for example, cartons or half-open display cartons or cartons and sacks, respectively, in one stack of goods according to the present invention.

The stacks of goods are frequently arranged on pallets but the present invention also includes stacks arranged on other carriers or, for example, on the floor or on the bed of a container or truck.

It was found by the present inventor that the exposed first major surface of the interlayer sheet formed at least partly by the first polymer layer wherein the polymer comprises at least one VLDPE, tends to exhibit a higher COF against cardboard upon stretching and, in particular, upon simultaneous biaxial stretching. Interlayer sheets according to the present invention wherein the exposed first surface of the interlayer sheet exhibits a COF against cardboard of at least 1.0, more preferably of at least 1.4 and especially preferably of at least 1.5, are preferred.

Stacks of goods according to the present invention wherein at least part of the surface of a piece of goods in a layer of said stack of goods which is in contact with at least part of the surface of an interlayer sheet according to the present invention, has a smooth surface roughness with an average roughness in Z direction of $R_z \leq 4$ µm, more preferably of $R_z \leq 3$ µm and especially preferably of $R_z \leq 2$ µm, were found to exhibit a favourable stability, and such stacks are therefore preferred. One or more of the goods in a stack of goods may already exhibit sufficient smoothness on at least part of the surface. Examples of such goods include display cartons sealed with a polyolefin foil, or polymer sacks containing bulk material. It is also possible that the smooth surface is provided by a pressure-sensitive adhesive tape which is applied to at least part of the surface of one or more goods in a stack of goods according to the present invention. Examples of such goods include cartons the flaps of which are usually sealed by applying a pressure-sensitive adhesive tape along the length of the carton on its top and bottom surface, respectively, as is shown in Fig. 2. Pressure-sensitive adhesive tapes which are useful in the present invention typically comprise a polymer backing which is optionally coated on one major surface with a release layer and bears a pressure-sensitive adhesive layer on the other major surface. Suitable backing materials include, for example, polyolefins, polyester, polyurethanes, polyvinylchlorides and blends of such materials. Suitable pressure-sensitive adhesive tapes are commercially available and include, for example, packing tape # 371 available from 3M Company, St. Paul, MN, U. S. A. Especially preferred are the pressure-sensitive adhesive tapes disclosed in the European patent application with the title "Use of a pressure-sensitive adhesive tape for increasing the stability of a stack of goods" filed by the present applicant on the day of filing of the present patent application at the European Patent Office.

It was found by the present inventor that a 90° peel adhesion is frequently observed between interlayers sheets according to the present invention and sufficiently smooth parts of the surfaces of one or more goods in the stacks of goods according to the present invention. Interlayer sheets according to the present invention wherein the first polymer layer comprises at least one VLDPE and is stretched or where the first polymer layer comprises at least one E/A(M)A-VA copolymer and is stretched or unstretched and, in particular, stretched, are preferred.

Although the present inventors do not wish to be bound by such theory, it is assumed that the 90° peel adhesion between the interlayer sheet and at least part of the surface of a first piece of goods in a first layer of said stack of goods which is in contact with the interlayer sheet, results in a lateral interaction forming a bond between the interlayer sheet and the layer of goods comprising said first piece of goods, thereby stabilizing the stack of goods and suppressing the movement of goods in each of these two layers or of these two layers against each other upon rapid acceleration or deceleration procedures during transportation, for example. The first polymer layer and the roughness of the interlayer sheet are preferably selected so that a 90° peel adhesion between these surfaces of at least 0.02 N/2.54 cm, more preferably of at least 0.05 N/2.54 cm and especially preferably of at least 0.1 N/2.54 cm is obtained.

In a first embodiment of a stack of goods according to the present invention, such stacks comprise two or more superimposed layers of goods and an interlayer sheet according to the present invention wherein the first major surface of the interlayer sheet formed at least partly by the first polymer layer, is in contact with at least one piece of goods in a layer of the stack. In a preferred example of the first embodiment of the stack of goods according to the present invention, such stack is arranged, for example, on a pallet and an interlayer sheet is included between the upper surface of the pallet and the bottom surface of the first layer of goods of such stack. In another preferred example of the present invention, an interlayer sheet is applied to the top surface of the top layer of goods in the stack whereby one or more goods of such top layer have an at least partly sufficiently smooth surface which interacts with the interlayer sheet and holds it in place. Application of an interlayer sheet to the top surface of the top layer of the stack of goods according to the present invention is advantageous because the interlayer sheet tends to stabilize the stack and additonally protects the stack against rain and dirt. Interlayer sheets according to the present invention comprising a first polymer layer and a support layer are preferred in the first embodiment of the stack of goods.

In a second embodiment of the stack of goods of the present invention, the interlayer sheet is interposed between the lower layer of a pair of superimposed, adjacent layer of said stack of goods and the upper layer of said pair of layers of said stack of goods wherein the first major surface of said interlayer sheet is in contact with at least part of the surface of a piece of goods in one of the two adjacent, superimposed layers of the pair of layers, and wherein the second major surface of the interlayer sheet is in contact with at least part of the surface of at least a piece of goods in the other layer of said pair of layers. Interlayer sheets according to the present invention comprising a first and second polymer layer and a support layer, are preferred in the second embodiment of the stack of goods.

Stacks according to the present invention facilitate internal transportation processes at a production site, internal storage of goods and external transportation to customers. Due to their increased stability, stacks according to the present invention usually do not need to be additionally secured at least for internal transportation processes between the production line and the packaging station which is a considerable advantage over prior art.

Whether or not the stacks of goods according to the present invention need to be additionally secured for internal transportation or storage or for external transportation processes, depends on various factors such as, for example:

(i) Whether or not the exposed layer or the backing of the pressure-sensitive adhesive tape is stretched;
(ii) The optional presence of one or more interlayer sheets and their respective surface roughness;
(iii) The number of interlayers used;
(iv) The shape and weight of the goods;
(v) The mode of arranging the goods in the stack.

With respect to (i), it was observed by the present inventor that the stability of stacks of goods according to the present invention can often be increased when employing interlayer sheets wherein the first polymer layer forming at least part of the first major surface of the interlayer sheet is stretched. This is especially pronounced for interlayer sheets wherein the first polymer layer comprises at least one VLDPE. In an especially preferred embodiment, the first polymer layer of the interlayer sheet according to the present invention is simultaneously biaxially stretched.

Stacks of goods referred to in item (ii) above, wherein at least part of the surface of one or more goods arranged in one or more layers of goods exhibit a surface roughness $R_Z \leq 4$ µm, are preferred. Especially preferred are stacks of goods wherein an interlayer sheet is inserted between the lower and upper of a pair of adjacent, superimposed layers of the stack whereby at least part of the exposed surface of at least one piece of goods in one of the layers of said pair of layers has a surface roughness of $R_z \leq 3$ µm, and at least part of the exposed surface of at least one piece of goods in the other layer of said pair of layers has a surface roughness $R_Z \leq 3$ µm, are in contact with said interlayer sheet.

The stability of the stack of goods depends on whether an interlayer sheet is inserted between one or more of the pairs of superimposed, adjacent layer of the stack of goods as is mentioned in item (iii) above. The stability of the stack of goods typically increases with the number of interlayer sheets and the number of sheets is usually selected to compromise between economical and security requirements.

The shape and weight of the goods arranged in the stack of goods according to the present invention also influences the stability of the stack as is noted above in (iv). Heavy-weight goods generally tend to form more stable stacks in comparison to light-weight goods unless such goods are rapidly accelerated or decelerated. Goods such as, for example, cartons wherein essentially all of the top surface of a carton in a lower layer is in contact with all of the bottom surface of a carton in the superimposed adjacent layer of the stack, tend to form more stable stacks than goods such as, for example, sacks where only part of such surfaces are in contact with each other.

Another factor which can influence the stability of the stacks of goods is the mode of stacking (item (v) above). In stacks of cartons, for example, the cartons can be arranged in columns as is shown in Fig. 2, or they can be arranged in a composite mode. In case of a column mode, the cartons within a column are usually sufficiently secured to each other whereas the different columns are only loosely connected to each other so that auxiliary stack-stabilzing means are usually required and can only be omitted if one or more suitable interlayer sheets are inserted which result in a lateral stabilization of the stack between adjacent columns.

The factors (i) to (v) described to some detail above are exemplary only, and the stability of the stacks of goods according to the present invention can be influenced by other factors than those described above.

The stability of a stack of goods is thus influenced by various factors and it has to be carefully examined in each particular case whether using of auxiliary stack-stabilizing means such as metallic or polymeric strapping bands or stretch/cling films which are wound around the stack, hot-melt adhesives or spray adhesives which are applied to the surface of the pieces of goods being in contact with other pieces of goods and further stabilizing means can be omitted. The use of the interlayer sheets according to the present invention comprising two or more layers and a first and second exposed major surface, at least part of the first major surface of the interlayer sheet being formed by a first polymer layer wherein the polymer has a Vicat softening point of less than 65 °C, results, however, in stacks of goods with a favourable and/or a superior stability as compared to stacks of goods known in the state of the art. The amount of auxiliary stack-stabilizing means required in the stacks of goods according to the present invention, can typically be distinctly reduced in comparison to the amount required in conventional methods of stabilizing stacks. Stacks according to the present invention wherein the use of auxiliary stack-stabilizing means can be omitted, are especially preferred.

The present invention will be further described with regard to the following examples. These examples are offered to further illustrate the various specific and preferred embodiments and techniques. It should be understood, however, that many variations and modifications may be made while remaining within the scope of the present invention.

Prior to this, some test methods are described which will be used in the examples.

Test Methods

*Vicat softening point*

Vicat softening points are measured according to ISO 306:1994(E) using a force of 10 N by which the steel rod with its indenting tip is pressed into the polymer sample, and a temperature increase rate of 120 °C/h.

*Coefficient of friction (COF)*

Coefficient of friction was measured according to Deutsche Industrie Norm (DIN) 53 375-B.

Two common packaging materials were employed as substrates and were tested for COF against the first polymer layer of the interlayer sheet. The substrate materials used were:

1) Cardboard available as Mosinee # 696C virgin fiberboard from Mosinee Paper Corporation, Wisconsin/USA).

2) # 371 Packaging Tape - commercially available as Tape # 371 from 3M Company, St. Paul, MN/USA.

Each substrate material was adhered, respectively, to the surface of a 7.5 cm x 23.5 cm aluminum test plate using a double-coated adhesive tape # 444 from 3M Company, St. Paul, Minnesota/USA. The material had the dimensions of 7.5 cm x 14.5 cm and was adhered to the aluminum test plate over its entire area with double-coated adhesive tape.

The frictional forces between one of the first polymer layers of the interlayer sheets and the respective substrate surface were measured by pulling a sled the bottom face of which comprising a flat surface area of 40 $cm^2$ (6.3

cm on one side) of said substrate material over the first polymer layer on the aluminum test plate. The total weight of the sled including 40 cm$^2$ of the test substrate was 200 g.

The interlayer sheets comprising a support layer, a first polymer layer and a second polymer layer were placed on the bottom face of the sled so that one of the first and second polymer layer, respectively, was exposed.

The static coefficient of friction was calculated from the frictional forces measured according to the following formula:

Static coefficient of friction ($\mu_s$)

$$\mu_s = F_s / F_\rho$$

where Fs is the static frictional force and $F_\rho$ is the normal force (the force acting perpendicular to the surfaces in contact). The normal force employed was 200g in each case.

Measurements were made by mounting the sled into a commercially available tensile tester (Instron ™) and pulling it for a total distance of ca. 7.5 cm at a rate of 100 mm / min across the exposed functional surface to be evaluated. Test data were collected and coefficient of friction results were calculated using the software package testXpert ® Version 04.96 / T-01-00 (Copyright 1996) available from Zwick GmbH & Co in Ulm, Germany.

The test was run five times for each material using five different samples and averaged.

*90° peel adhesion*

90° peel adhesion of the first polymer layer of the interlayer sheet from a surface of common packaging materials was measured using a tensile tester adapted in a special configuration to allow a peel angle of 90° to be maintained during the test. The equipment configuration is described in FINAT Test Method no. 2, a standard 90° peel test method (available from Federation Internationale des Fabricants Europeens et Transformateurs d'Adhesifs et Thermocollants sur Papiers et autres Supports (FINAT)).

There were several exceptions to the described FINAT method which are given below:

1) FINAT 2 requires a glass substrate. Glass was replaced by a stainless steel plate with sheets of either cardboard or packaging tape as specified attached to the surface using double-coated adhesive tape.
2) A "standard FINAT test roller" was replaced by a 6.8 kg roller.
3) The laminate comprising the packaging material and the interlayer sheet was rolled twice at 300 mm/min rather than twice at 200 mm/min as called for by the FINAT 2 method.

The interlayer sheet including its exposed first polymer layer to be evaluated was cut into strips having a width of 1.27 cm. A strip of the interlayer sheet was then rolled down onto the packaging tape or cardboard, respectively, on the test plate so that the first polymer layer of the interlayer sheet faced the test plate surface, using a 6.8 kg roller at a speed of 300 mm/min.

The force required for removal of the interlayer sheet from the packaging material substrate after a dwell time of 20 min. at 23 °C was then measured using a tensile tester arranged in a configuration so that the peel angle from the substrate was maintained at 90° during the test.

Each first polymer layer of the intrerlayer sheets to be tested was evaluated using three different samples and the results averaged. 90° peel adhesion results were recorded in N/2.54 cm.

The packaging materials which were attached to the test plate and used as test surfaces were:

a) Cardboard available as Mosinee # 696C virgin fiberboard from Mosinee Paper Corporation, Wisconsin/USA

b) # 371 Packaging Tape - commercially available as Tape # 371 from 3M Company, St. Paul, MN/USA.

*Roughness, $R_z$ DIN*

The mechanical surface roughness of the first polymer layers of any given interlayer sheet material was measured according to the method Deutsche Industrie Norm (DIN) 4768 (Sheet 1) using a Model T-2000 from Hommelwerke GmbH, Schwenningen, Germany. The results are recorded as $R_Z$ DIN, the arithmetic mean of five values of the difference between the maximum and minimum value in five neighboring single measurement lengths in the filtered roughness profile, and given in μm.

Materials employed in the Examples

Polypropylene (PP) - film grade polypropylene homopolymer, density 0.905, melt flow (g/10 min) 2.5, melting point 163 °C (available as FINA 3374X from Fina Oil and Chemical Company).

PP/PE - 50:50 wt:wt mixture of polypropylene (available as PPC 8750 from Fina Atochem) and polyethylene (available as ATO LD0304 from Fina Atochem).

Paper - 85 µm thick brown kraft paper.

AFFINITY EG 8150 - a polyolefin plastomer (POP) comprising a saturated ethylene octene copolymer, melt index (190°C / 2.16 kg) measured by ISO 1133 (g/10 min) = 0.5, Mooney viscosity (ML 1+4/121°C) according to DIN 53523/T1 of 35, density of 0.868, Vicat softening point of 45 °C, available as AFFINITY EG 8150 from Dow Plastics, a business unit of Dow Europe S.A.

LOTRYL 28MA07 - a random copolymer of ethylene (70-74 %) and methyl acrylate (26-30 %), melt index 6-8 (g/10 min), melting point 65 °C, Vicat softening point < 40 °C, available from Elf Atochem .

EVATANE 28-03 - a random copolymer of ethylene and vinyl acetate, ethylene (73 %) vinyl acetate (27 %), melt index (g/10 min) = 3-4.5, melting point = 75 °C, Vicat softening point = 44 °C, available from Elf Atochem.

Examples

*Example 1*

An interlayer sheet comprising one layer of polypropylene (FINA 3374X, polypropylene homopolymer, density 0.905) as a support layer and two layers of very low density polyethylene (polyolefin plastomer having a density of 0.868, Vicat softening point of 45 °C, available as AFFINITY EG 8150 from Dow Plastics) as first polymer layer and second polymer layer, respectively, was prepared by coextrusion, employing two parallel single screw extruders. The main extruder for the polypropylene support layer was a 1 ♂" diameter single screw extruder (HPM Company) with a L/D of ca 28 held at about 227-249 °C. The auxiliary extruder for the exposed layers was a single screw extruder (Brabender Company) with a 1 ⌑" screw and an L/D of ca. 22 held at 200-250°C. The two extruders fed a Cloeren ™ multilayer feed die held at a temperature of 243 °C. The total thickness of the three-layer, unstretched sheet of film was ca.2.6 mm.

The three-layer interlayer sheet was then subjected to a simultaneous orientation process using a LISIM ™ HUT tenter stretching apparatus (available from Brueckner Maschinenbau GmbH, Siegsdorf, Germany) to give a film which was stretched about 5.4 times its original length in the machine direction (MD) and about 9 times its original width in the cross-web direction (CD). The final thickness after stretching of the film was 4 µm for each of the first and second polymer layer, respectively, and 46 µm for the polypropylene support layer. The construction of the film sheet is summarized in Table 1.

Properties of the sheet of film were evaluated by determining its coefficient of friction (COF) against two surfaces commonly present on the surface of stackable cartons: cardboard and a commercially available box-sealing tape, # 371 Tape from 3M Company, St. Paul, MN/USA. Properties of the exposed first polymer layer of the interlayer sheet are also summarized in Table 1.

*Example 2*

A 50 µm layer of Affinity EG 8150 was coextruded onto each of the two sides of a layer of 85 µm brown kraft paper along with a 10 µm layer of ethylene-acrylic acid copolymer as a primer or tie layer. The properties of the unoriented exposed layer of Example 2 are shown in Table 1.

*Example 3*

The interlayer sheet was prepared by extrusion of three single-layer films: two used as first and second polymer layer and one as the support layer, respectively, and then heat laminating the three individual films together. The first and second polymer layers were both Lotryl 28MA07 and the support layer was polypropylene. The resulting sheet of film was then simultaneously biaxially oriented using the method described in Example 1. The final thickness of each of the exposed first and second polymer layers was 12 µm and of the polypropylene support layer was 43 µm. The construction of the interlayer sheet and the test results of the exposed first polymer layer against both cardboard and commercially available packaging tape are shown in Table 1.

*Example 4*

Example 4 was prepared by a process essentially the same as Example 2, with the exception that the exposed first and second polymer layers were both Lotryl 28MA07, a random copolymer of ethylene (70-74 %) and methyl acrylate (26-30 %), melt index 6-8 (g/10 min), melting point 65 °C, Vicat softening point < 40 °C, available from Elf Atochem. The exposed first and second polymer layers each had a final thickness of 51 µm.

*Example 5*

The co-extrusion process of Example 1 was employed to prepare a three layer interlayer sheet. Each of the exposed first and second polymer layers was Evatane 28-03, a random copolymer of ethylene and vinyl acetate, ethylene (73 %) vinyl acetate (27 %), melt index (g/10 min) = 3-4.5, melting point = 75 °C, Vicat softening point = 44 °C, available from Elf Atochem. The thickness of the exposed first and second polymer layer was each 20 µm. The support layer comprised a 50:50 wt:wt mixture of polypropylene (available as PPC 8750 from Fina Atochem) and polyethylene (available as ATO LD0304 from Fina Atochem) in a thickness of 50 µm. The construction of the interlayer sheet and the properties of the exposed first and second polymer layer are summarized in Table 1.

*Example 6*

Example 6 was prepared by the method employed in both Examples 2 and 4, by co-extrusion of exposed first or second polymer layer, respectively, and a primer layer onto each side of an 85 µm kraft paper support layer. The two exposed layers of Evatane 28-03 each had a thickness of 49 µm.

*Example 7*

Example 7 was prepared by the co-extrusion and simultaneous biaxial stretching as described in Examples 1 and 3. The exposed first and second polymer layer, respectively, was Evatane 28-03 and the support layer was polypropylene. The final thickness of the first and second polymer layers, respectively, was 12 µm and of the support layer was 43 µm. The construction of this interlayer sheet and the properties of the exposed first polymer layer against cardboard and packaging tape are summarized in Table 1.

*Comparative Example C1*

A commercially available sheet used as an interlayer sheet in stacking of palllets loaded with cardboard boxes was evaluated. This repulpable slip-resistant paper was available as ANTIGLISSE 2150 (brown), 150 g/m$^2$ from CGP Industries, Decines, France (through Roscheck KG, Cologne, Germany). The anti-slip paper was tested for its properties against both cardboard and packaging tape. Test results are shown in Table 1.

*Comparative Example 2*

A commonly available cardboard was evaluated for its properties against itself and against packaging tape. Test results are shown in Table 1.

Table 1

| Ex. | INTER LAYER | | | | SURFACE OF GOODS | | | |
|---|---|---|---|---|---|---|---|---|
| | First polymer layer | | Support layer | Second polymer layer | Card-board | | # 371 Tape | |
| | Polymer | VICAT Softening Point [°C] | | | C O F, 200 g | 90° Peel adhesion [1] (N/2.54 cm) | COF, 200g | 90° Peel adhesion[1] (N/2.54 cm) |
| 1 | Affinity EG 8150, oriented | 45 | PP, oriented | Affinity EG 8150, oriented | 1.3 | 0 | 3.2 | 0.03 |
| 2 | Affinity EG 8150, unoriented | 45 | Paper | Affinity EG 8150, unoriented | 0.7 | .0 | 3.2 | 0.01 |
| 3 | Lotryl 28MA07, oriented | < 40 | PP | Lotryl 28MA07, oriented | 0.8 | 0 | 1.3 | 0.12 |
| 4 | Lotryl 28MA07, unoriented | < 40 | Paper | Lotryl 28MA07, unoriented | 3.6 | 0 | 1.9 | 0.10 |
| 5 | EVA, unoriented | 44 | PP/PE | EVA, unoriented | 0.8 | 0 | 3.3 | 0.02 |
| 6 | EVA, unoriented | 44 | Paper | EVA, unoriented | 0.6 | 0 | 4.8 | 0.01 |
| 7 | EVA, oriented | 44 | PP | EVA, oriented | 1.1 | 0 | 3.4 | 0.04 |
| C1 | Slip-resistant paper interlayer | -- | -- | -- | 1.0 | 0 | 1.0 | 0.00 |
| C2 | Cardboard interlayer | -- | -- | -- | 0.4 | 0 | 0.2 | 0.00 |

[1] 90° Peel adhesion of first polymer layer from surface of goods (N/2.54 cm)

Table 2

| Surface type | Roughness, $R_{Z\,DIN}$, μm |
|---|---|
| Cardboard box | 23 |
| 371 Packaging Tape | 1.7 |

**Claims**

1.  Stack of goods comprising two or more superimposed layers of goods and an interlayer sheet comprising two or more layers and a first and second exposed major surface, at least part of the first major surface of the interlayer sheet being formed by a first polymer layer wherein the polymer has a Vicat softening point of less than 65 °C, said first major surface of said interlayer sheet being in contact with at least part of the surface of at least one piece of goods of a layer of the stack.

2.  Stack of goods according to claim 1 wherein said interlayer sheet being interposed between the lower layer of a pair of interposed, adjacent layers of said stack of goods and the upper layer of said pair of layers of said stack of goods wherein the said part of said first major surface of said interlayer sheet is in contact with at least part of the surface of at least one piece of goods in one of said layers of the pair of layers and at least part of the surface of the second major surface of said interlayer sheet is in contact with at least part of the surface of at least one piece of goods in the other layer of said pair of layers of said stack of goods.

3. Stack of goods according to claim 1-2 comprising one or more additional interlayer sheets between further pairs of adjacent, superimposed layers of goods.

4. Stack of goods according to any of claims 1-3 wherein the first polymer layer or part or all of the interlayer sheet including the first polymer layer, is stretched.

5. Stack of goods according to claim 4 wherein the the first polymer layer or part or all of the interlayer sheet including the first polymer layer, is biaxially stretched.

6. Stack of goods according to any of claims 5 wherein the the first polymer layer or part or all of the interlayer sheet including the first polymer layer, is simultaneously biaxially stretched.

7. Stack of goods according to claims 5 and 6 wherein the stretch ratio in the two directions of biaxial stretching is independently from each other at least 3:1.

8. Stack of goods according to any of claims 1 -7 wherein the polymer of the exposed layer of the film comprises one or more polymers selected from a group consisting of very low density polyethylenes (VLDPEs) and copolymers comprising an olefin as a first comonomer and an alkyl(meth)acrylate or vinyl acetate as a second comonomer.

9. Stack of goods according to any of claims 1-8 wherein the first polymer layer of the interlayer sheet has a thickness of between 1-40 $\mu$m.

10. Stack of goods according to any of claims 1-9 wherein the interlayer sheet comprises at least one non-exposed layer comprising a polymer selected from the group consisting of polyolefins, polyesters, polystyrols, polycarbonates, polyvinylchloride, polyamide and blends of two or more of such polymers.

11. Stack of goods according to any of claims 1-10 wherein the non-exposed layer or layers of the interlayer sheet have independently from each other a thickness of between 10-200 $\mu$m.

12. Stack of goods according to claims 1-11 wherein at least said part of the surface of said piece of goods in one of the layers of said stack or in oe of the layers of said pair of adjacent, superimposed layers of the stack, respectively, has a smooth surface with an average roughness Rz of not more than 2 $\mu$m.

13. Stack of goods according to claims 2-11 wherein at least said part of the surface of said piece of said goods in the other layer of the said pair of adjacent, superimposed layers of the stack has a smooth surface with an average roughness Rz of not more than 2 $\mu$m.

14. Stack of goods according to claims 12-13 wherein said parts of said first and/or second piece or pieces of goods, respectively, are formed by the exposed backing of a pressure-sensitive adhesive tape comprising a backing and a pressure-sensitive adhesive layer.

15. Use of an interlayer sheet comprising two or more layers and a first and second exposed major surface, at least part of the first major surface of the interlayer sheet being formed by a first polymer layer wherein the polymer has a Vicat softening point of less than 65 °C, for increasing the stability of a stack of goods.

16. Method of preparing a stack of goods comprising superimposing at least two layers of goods and inserting an interlayer sheet between at least one pair of superimposed, adjacent layers of goods of said stack.

17. Interlayer sheet comprising two or more layers and a first and second exposed major surface, at least the first major surface of the interlayer sheet being formed by a first polymer layer wherein the polymer has a Vicat softening point of less than 65 °C.

Figures

1a

10

1

2

2a

*Fig. 1a*

1a

10

1

2

3

3a

*Fig. 1b*

_Fig. 2_

# EP 1 184 164 A1

**European Patent Office**

**EUROPEAN SEARCH REPORT**

Application Number

EP 00 11 8967

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 36 35 928 A (HOECHST AG) 28 April 1988 (1988-04-28) | 16 | B32B7/04 B32B27/00 |
| A | * claims 1,2,9 * <br> * page 2, line 45 - page 3, line 62 * <br> * example 1 * | 1-15,17 | |
| A | US 5 647 191 A (VILLEMURE ALAIN) 15 July 1997 (1997-07-15) <br> * claim 1 * <br> * column 4, line 38 - line 62 * | 1-17 | |

| | TECHNICAL FIELDS SEARCHED (Int.Cl.7) |
|---|---|
| | B32B <br> B65D |

The present search report has been drawn up for all claims

| Place of search | Date of completion of the search | Examiner |
|---|---|---|
| THE HAGUE | 18 January 2001 | Girard, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

18

**EP 1 184 164 A1**

**ANNEX TO THE EUROPEAN SEARCH REPORT
ON EUROPEAN PATENT APPLICATION NO.** EP 00 11 8967

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2001

| Patent document cited in search report | Publication date | Patent family member(s) | Publication date |
|---|---|---|---|
| DE 3635928 A | 28-04-1988 | NONE | |
| US 5647191 A | 15-07-1997 | CA 2185417 A | 22-06-1997 |
|  |  | US 5938036 A | 17-08-1999 |

For more details about this annex : see Official Journal of the European Patent Office, No. 12/82

19